# EUROPEAN PATENT APPLICATION

(11) **EP 1 072 986 A2**
(43) Date of publication of application: **31.01.2001**
(21) Application number: 99308130.6
(22) Date of filing: 14.10.1999
(51) Int. Cl.: G06F 17/30

(54) **System and method for extracting data from semi-structured text**

(30) Priority: 30.07.1999 US 146621 P
(71) Applicant: Academia Sinica, Nan-Kang, Taipei, 115 (TW)
(72) Inventor: Hsu, Chun-Nan, Inst. of Information Science, Nankang, Taipei (TW); Chang, Chian-Chi, Wanhua, Taipei (TW)
(74) Representative: Evens, Paul Jonathan

(57) **Abstract**

An information extractor for extracting subsets of text sequences having certain attributes from a semi-structured text sequence. The information extractor resembles a finite state transducer that includes a number of states and transition paths between the states. Each state is defined to be associated with the extraction of subsets of tokens having a certain attribute. Each transition path represents a possible transition from one subset of tokens having a certain attribute to another subset of tokens having another attribute. Contextual rules are used to determine when a transition occurs and which transition path to take. By using contextual rules that consider the token patterns before and after a token, the information extractor can process documents with irregular layout structures and attributes having a greater variety of permutations.

The state transition diagram, used in one embodiment of the information extractor, represents the different sequence of states that the extractor may go through when it extracts attributes *U,N,A* and/or *M* from an entry in the input text sequence. The extractor starts in state *b/e* 202, then reads a token and determines whether the token belongs to an attribute. For example, the first attribute within an entry must be either *U* or *N*. Hence, there is one transition path 218 from state *b/e* 202 to state *U* 204, and another transition path 220 from state *b/e* 202 to state *N* 208. If the token does not belong to either attribute *U* or *N*, then the extractor remains at state *b/e* 202, shown by the path 224.

## Description

### BACKGROUND INFORMATION

The present invention relates to extraction of information from text documents.

Many organizations have large and increasing numbers of electronic files that contain information of great value. The World Wide Web ("Web") itself is a huge depository of such information. Tools that enable computers to search and analyze this vast amount of information are being developed. However, unlike tabular information typically stored in databases today, many documents have only limited internal structure, and thus are called "semi-structured text". For example, a document relating to faculty member information may include a list of entries having words or strings that have certain attributes, such as the faculty name, personal Web page address, contact address, and academic title, etc. The information may be formatted into a tabular list for easy viewing.

An example of semi-structured text is a Web page written in Hyper Text Markup Language (HTML). HTML uses tags that specify the formats and characteristics of graphics and characters in the Web page. For example, text lying between a pair of tags "<B>" and "</B>" specifies that the text is to be displayed in bold. These HTML tags within the document are directed mainly toward formatting the output style, but the tags themselves may not tell the computer what content is between the tags. For example, given an input string "<B> John </B>", the tags "<B>" and "</B>" does not indicate to the computer whether "John" corresponds to a name, a contact address, or an academic title.

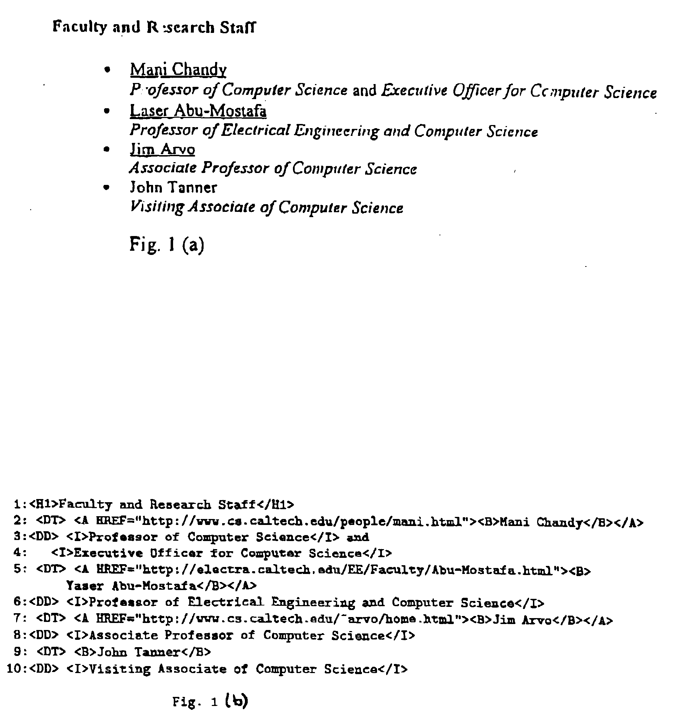

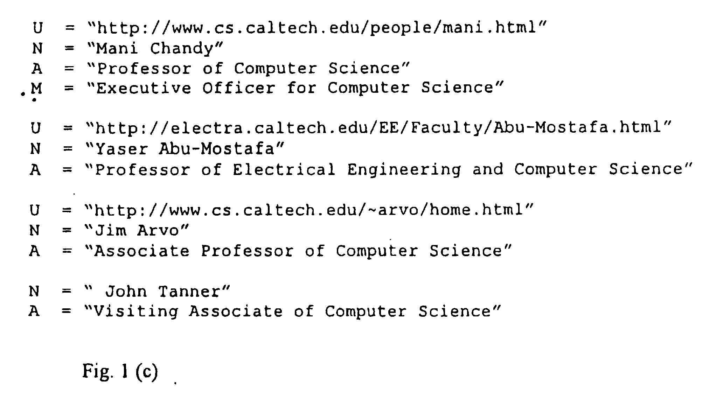

A program written to extract information from documents or text sequences is called an information extractor or a "wrapper". An information extractor may be adapted to extract a particular set of words or strings having certain attributes from documents or text sequences that have a particular structure. For example, an information extractor may be adapted to process a Web page such as the one shown in Fig. 1(a) with four entries. Referring to Fig. 1 (b), the HTML text sequence for that Web page has four entries, each entry including a combination of text strings having attributes "URL (*U*)", "Name (*N*)", "Academic Title (*A*)", and "Administrative Title (*M*)". Referring to Fig. 1 (c), the first data tuple to be extracted from the first entry include four text strings having attributes *U*, *N*, *A*, and *M*. The second and third data tuple each contain three text strings having attributes *U*, *N*, and *A*. The fourth data tuple contains text strings having attributes *N* and *A*. For simplicity, a "text string having attribute *U*" will simply be referred to as "attribute *U*". Thus, the term "attribute" will refer to a text sequence having a particular attribute.

To extract attributes from the text sequence of a Web page, a preprocessor first segments the text sequence into tokens. A token may contain words, numbers, HTML tags, etc. For example, in Fig. 1(b), "<H1>" may be a token, while the word "Faculty" may represent another token. An attribute may comprise several tokens. For example, the Name attribute "Mani Chandy" may contains two tokens: "Mani" and "Chandy". The information extractor reads the tokens, and applies a set of predefined extraction rules to extract attributes from these tokens. For example, one possible rule may be that whenever a pair of HTML tags "<B>" and "</B>" are encountered, the text between them is extracted as the Name attribute.

Extraction rules are typically generated by a separate program called a learning program. A learning program reads a training sample (a short text sequence from the targeted Web page) with attributes labeled by a user. For example, a user may use a graphics user interface (GUI) to highlight or label the parts within the sample text sequence that correspond to the "Name" attribute. The learning program then finds the pattern for locations that the highlighted or labeled part appear in the sample text sequence. That pattern then becomes the rule for extracting the "Name" attribute.

After a set of extraction rules are generated, a user may test these rules on a second sample text sequence to see if the information extractor can correctly extract all the attributes. If not, then the learning program can be invoked again, and the user labels the attributes that were identified incorrectly with the correct attribute names. The learning program then modifies the extraction rules so that they can correctly identify the attributes in the first and second sample text sequences. The learning program is also used to update the extraction rules when a targeted Web page changes its format or data structure. Because it is not uncommon for Web pages to be modified often, a learning program that requires a minimal set of training samples is desired.

When extracting attributes from a document, different types of information extractors may use different extraction rules. For example, one information extractor called the "LR-wrapper" uses rules for finding tokens with left-right pair structure. Another information extractor often referred to as the "stalker-wrapper" may have rules for skipping certain types of tokens and searching for certain kinds of "landmark" tokens.

### SUMMARY

The present invention is directed to an information extractor that searches for attributes within a semi-structured input text sequence. In general, the information extractor resembles a finite state transducer that includes a number of states and transition paths between the states. Each state is defined to be associated with the extraction of a certain attribute. The allowable transition paths between the states are associated with the possible permutations of the attribute sequences. For each transition path, there is a corresponding contextual rule. When a pattern in the input text sequence satisfies a particular contextual rule, a transition between states occurs, thus the information extractor enters into the next state that is associated with the extraction of another attribute. By use of contextual rules that also considers the tokens before and after the current input token, the information extractor of the present invention can process documents with irregular layout structures and attributes having a greater variety of permutations.

The invention features an information extractor that can automatically extract attributes from a greater variety of document styles, and update the extraction rules in an efficient manner. Unlike other information extractors that use a rigid set of rules, and thus can only process documents with attributes arranged with a certain structure, the present invention can adapt to variations in document format styles.

One advantage of the present invention is that the information extractor may be able to identify the attributes correctly even when there are missing attributes, or if the order of attributes varies.

Another advantage of the present invention is that the information extractor is suitable for processing documents having an irregular data structure or having a tabular layout style.

An additional advantage of the present invention is that the information extractor use a learning program that requires a minimal set of training samples to generate the extraction rules.

### DESCRIPTION OF DRAWINGS

Fig. 1 (a) shows the output of a sample Web page relating to a faculty and research staff Web site.

Fig. 1 (b) shows the HTML text sequence (source code) for the Web page of Fig. 1(a).

Fig. 1(c) shows the attributes extracted from the HTML text sequence of Fig. 1 (b).

Fig. 2 is an example of a state transition diagram used in one embodiment of the information extractor of the present invention.

Fig. 3 shows a list of possible transition paths.

Fig. 4 shows exemplary token types that may be used by an information extractor of the present invention.

Fig. 5 shows a sample text sequence segmented into tokens using the token types listed in Fig. 4.

Fig. 6 shows the HTML text sequence (source code) for a sample Web page.

Fig. 7 shows a state transition diagram used in an alternative embodiment of the information extractor of the present invention.

Fig. 8 is an example of a state transition diagram used in conjunction with the alternative embodiment of the present invention.

Fig. 9 (a) shows the HTML text sequence of Fig. 1(b) with arrows indicating the borders of the body containing the attributes.

Fig. 9 (b) shows the HTML text sequence of Fig. 1(b) with arrows indicating the borders of the attributes.

Fig. 10 is an example of a tagged-list document.

Fig. 11 is an example of a state transition diagram used in an embodiment of the present invention for extracting attributes from a tagged-list document.

Fig. 12 (a) is an example of an attribute list extracted from the tagged-list document of Fig. 10.

Fig. 12 (b) is an example of a list of *Tag* and *Value* attributes extracted by an information extractor using the state transition diagram of Fig. 11.

Fig. 13 shows a sample text sequence with attributes enclosed in boxes.

Fig. 14 is an example of a flow diagram for generating transition rules used by the information extractor of the present invention.

Fig. 15 (a) is a sample text sequence having tokens *A1, A2, ... A20.*

Fig. 15 (b) shows the scope of state *X* and state *N* within the sample text sequence of Fig. 15(a).

Fig. 15 (c) shows the definition of the left and right context.

Fig. 16 shows the token class definitions used in an embodiment of the learning program according to the present invention.

Fig. 17 (a) shows a first set of contextual rules.

Fig. 17 (b) shows a second set of contextual rules.

Fig. 17 (c) shows a third set of contextual rules.

Fig. 18 shows a flow diagram for generating a contextual rule in accordance with an embodiment of the present invention.

Fig. 19 shows a set of contextual rules for extracting the attributes *Name, Academic_title,* and *Admin_title* from a text sequence.

Fig. 20 shows the sample text sequence of Fig. 13 with the first token of the first attribute of each entry labeled B1, B2, B3, and B4.

### DETAILED DESCRIPTION

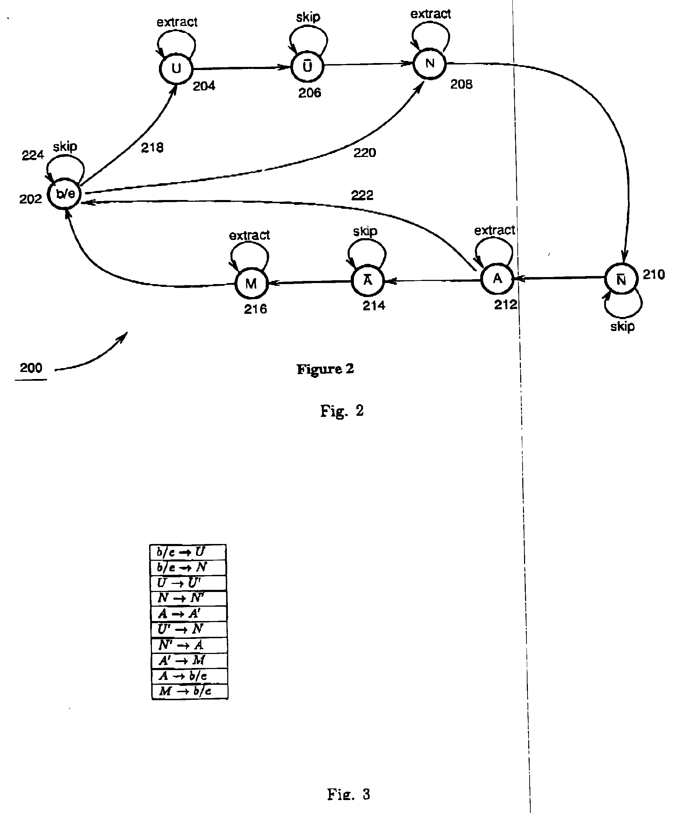

Referring to Fig. 2, a state transition diagram 200 represents the state transition rules used in an embodiment of the information extractor. In this example, the information extraction is a single pass information extractor suitable for extracting attributes URL (*U*), name (*N*), academic title *(A),* and administrative title (*M*) from a text sequence. The input text sequence may come from a Web page such as the one shown in Fig. 1(a), or it may be a document generated by a word processor having similar attributes. The input text sequence is first divided into tokens before being sent to the information extractor. Thus, the information extractor receives the input text sequence along with a sequence of offset numbers indicating the location of each token. The information extractor can extract attributes within an entry having the sequences of (*U*, *N, A, M*), *(U, N, A),* or *(N, A).* If an input text sequence has different attributes, or has different permutations of attributes, then the single pass information extractor will also have a different set of state transition rules.

The term "attribute" is used to refer to a set of consecutive tokens that is a subset of the token sequence having the same characteristics. For example, an attribute *U* may represent a set of consecutive tokens that form an URL address. A token that is part of the URL address belongs to the attribute *U*. Similarly, the attribute *N* may represent a set of consecutive tokens that form a person's name. The term "state" is used as a shorthand or label for describing the actions of an information extractor. The term "extractor" as used herein is intended to mean information extractor. When the extractor is in state *U*, it means that the extractor is performing functions associated with extracting attribute *U*. Extracting an attribute may include the actions of reading a sequence of tokens and concatenating them to form a single string. When the extractor enters state *U*', it means the extractor performing functions associated with reading dummy tokens located between attribute *U* and the next attribute. A dummy token is a token that does not belong to an attribute.

When the extractor is in state ***b/e*** (abbreviation for begin/end), it means the extractor is reading tokens that are between the last attribute of an entry and the first attribute of the next entry. The state ***b/e*** can also mean that the extractor is performing functions associated with reading the dummy tokens before the first attribute in the input text sequence. The state ***b/e*** may also mean that the extractor is performing functions associated with reading the dummy tokens after the last attribute in the input text sequence. In certain applications, a **GB** (abbreviation for Global Begin) state is defined to be associated with the actions of reading the tokens before the first attribute. Likewise, a **GE** (abbreviation for Global End) is defined to be associated with the actions of reading the tokens after last attribute in the text sequence.

The term "contextual rule" refers to comparing the context of a token with a set of predetermined token patterns to see if there is a match. The context of a token includes the token under consideration, and possibly the tokens before and/or after it. For example, suppose the input text sequence is:
<DT> <A HREF="http://www.cs.caltech.edu/people/mani.html"> and the token "http" identifies a transition from state ***b/e*** to state *U*, a contextual rule may be:
Transfer from state ***b/e*** to state *U* if
Left context = "HREF=s"'' and
Right context = "http://''.

The reference point for the left and right context is the location immediately preceding the token under consideration ("http"). Thus, the "left context" refers to the token(s) before "http", and the "right context" refers to "http" and a few additional tokens -- ":","/", and "/". The specific number of tokens in the left context and the right context varies with the contextual rules. For example, a contextual rule may require the left context to include 3 tokens and the right context to include only one token. Another contextual rule may require the right context to include two tokens, while not requiring a comparison of the left context.

Within an entry, we define a dummy attribute *U'* to include all tokens that are between attribute *U* and the next attribute. Likewise, we define a dummy attribute *N'* to include all the dummy tokens between attribute *N* and the attribute *A.* Dummy attribute *A'* includes dummy tokens between attribute *A* and *M*.

The state transition diagram in Fig. 2 represents the different sequence of states that the extractor may go through when it extracts attributes *U*, *N, A,* and/or *M* from an entry in the input text sequence. The extractor starts in state ***b/e*** 202, then reads a token and determines whether the token belongs to an attribute. In this example, the first attribute within an entry must be either *U* or *N.* Hence, there is one transition path 218 from state ***b/e*** 202 to state ***U*** 204, and another transition path 220 from state ***b/e*** 202 to state N 208. If the token does not belong to either attribute *U* or *N*, then the extractor remains at state ***b/e*** 202, shown by the path 224.

Referring to Fig. 3, the possible state transitions for the extractor defined by the state transition diagram of Fig. 2 is shown. For each possible state transition listed in Fig. 3, there is a corresponding transition path in Fig. 2. The transition from state ***U*** 204 to state ***U'*** 206 means that the end of attribute *U* is detected, and that the current token (and possibly the tokens afterwards) is a dummy token that do not belong to any attribute. The transition from state ***U'*** 206 to state *N* 208 means that the beginning of state N 208 is detected, and that the current token (and possibly the tokens afterwards) belongs to attribute *N.* When the information extractor extracts attributes *U*, *N*, and *A* from the second entry in Figure 1(b), it goes through the states ***b/e - U- U'- N-N'-A - b/e.*** After the last attribute (*A*) within an entry is extracted, the extractor transfers to state ***b/e*** 202, meaning that the current token is a dummy token located before the first attribute of the next entry.

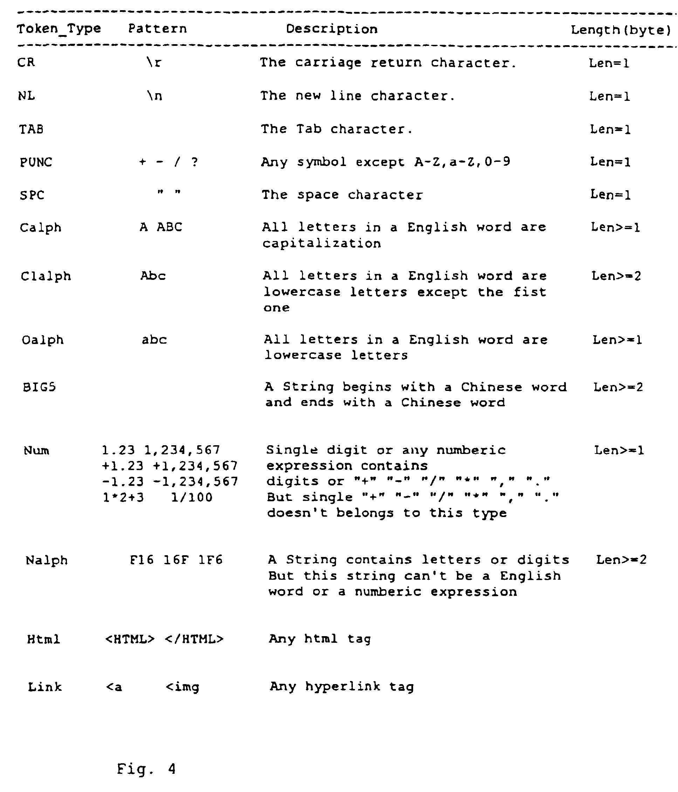

There are two transition paths leaving state ***b/e*** 202 in Fig. 2. The extractor determines which path to take by use of contextual rules. Each path has a corresponding contextual rule. If the context of a token matches the contextual rule of a transition path, then the state is transferred according to that contextual rule. For example, the contextual rule associated with the transition of state ***b/e*** 202 to ***U*** 204 may be
Rule 1: Transfer from state *b/e* to state ***U*** if
Left context = Calph(HREF) Punc(=) Punc(") and
Right context = 0alph(http) Punc ( : ) Punc(/) Punc(/).
(Note: The token class Calph() represents strings having all capital letters. The token class Punc ( ) represents punctuation marks. The token class 0alph() represents strings having all lower case letters. These are described in more detailed in Fig. 4.) Rule 1 requires that the left context to be the string "HREF="", and the right context to be the string "http://". The contextual rule associated with the transition of state ***b/e*** 202 to *N* 208 may be
Rule 2: Transfer from state b/e to state N if
Left context = Html(<B>) and
Right context = Clalph(_).
(Note: The token class Html() represents all HTML tags, and the token class Clalph() represents strings that begin with a capital letter and has at least one lower case letter. The symbol "_" denotes the wildcard character, thus any string that begins with a capital letter and has at least one lower case letter will match the token pattern C1alph(_).)

If the context of a token satisfies Rule 1, then the transition path from state ***b/e*** 202 to state ***U*** 204 is taken. On the other hand, if the context of a token satisfies Rule 2, then the transition path from state ***b/e*** 202 to state ***N*** 208 is taken. Otherwise, the extractor remains in state ***b/e*** 202 and continues reading tokens until one of the two rules is satisfied.

In some applications, it may be feasible to add a ***GB*** state before the first ***b/e*** state, and a ***GE*** state after the last ***b/e*** state. This is because the left/right context of the first token of the first attribute in the first entry may be different from the left/right context of the first token of the first attribute in the second entry. Likewise, the left/right context of the last token of the last attribute in the last entry may be different from the left/right context of the last token of the last attribute in the second-to-last entry.

Referring to Fig. 4, the token classes used to tokenize a text sequence are described. The first column lists the name of the token class, the second column lists the pattern of the token, the third column describes the token type, and the last column lists the length of the token. Other token classes may be defined depending on the particular application. The learning program described later may use different token classes to generate the left/right context patterns.

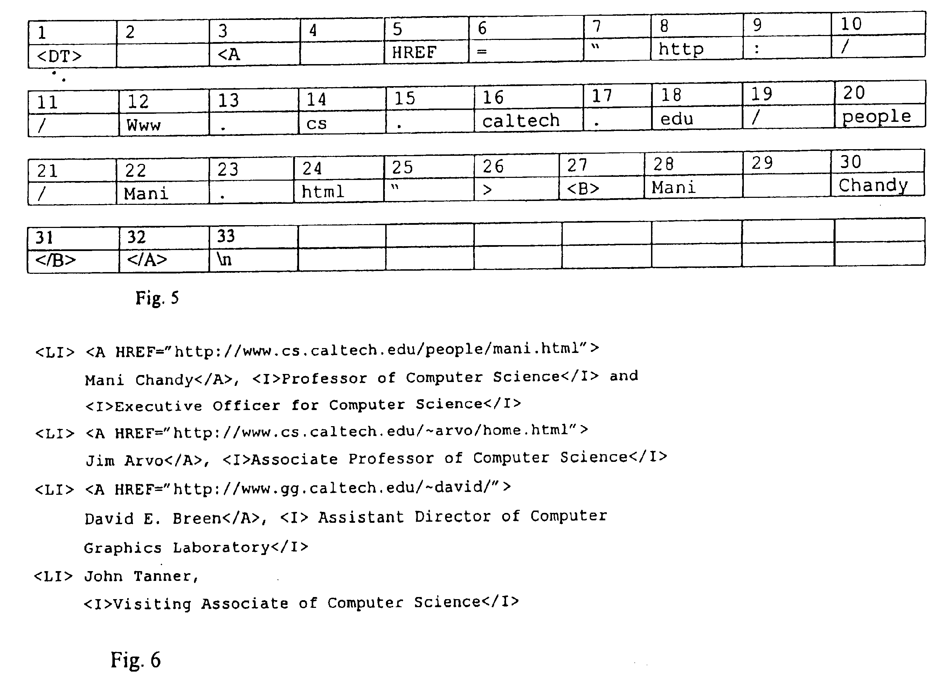

Referring to Fig. 5, the text sequence of the second line of the HTML source code shown in Fig. 1(b) is segmented into tokens. The first token is an HTML tag "<DT>", the second token is a space character " ", and the third token is an HTML tag "<A", etc. The eleventh token is the punctuation "/", the twelfth token is the string "www", and the thirteenth token is the punctuation ".", etc.

The left context of token 1 ("<DT>") is a new line character (which is the end of the previous line in Fig. 1(b), and is not shown in Fig. 5). Thus, token 1 does not satisfy Rule 1 or Rule 2. Tokens 2, 3, 4, 5, 6, and 7 also do not satisfy Rules 1 and 2 Token 8 satisfies Rule 1 because the left context of token 8 is "HREF="'', and the right context of token 8 is "http://". Therefore, at token 8, the extractor transfers from state ***b/e*** 202 to state ***U*** 208. Note that under our definition, the separation point of left/right context for token 8 is between the quotation mark (") and the character 'h'.

The contextual rules require that the extractor "look-ahead" and read additional tokens in order to make a comparison of the right context. For example, Rule 1 requires that the extractor read an additional three tokens to make the comparison of the right context because "http://" includes four tokens. The specific number of additional tokens that need to be read depends on the particular set of contextual rules. Initially, the extractor may read a number of tokens required by the contextual rules.

Another example of a contextual rule that identifies a transition from any other state to state ***A*** may be:
Rule 3: Transfer to state ***A*** if
Left context = Html(<DD>) Html(<I>) and
Right context = C1alph(_)
Rule 3 requires that the left context is an HTML tag "<DD>" followed by another HTML tag "<I>". In addition, the right context must be a string that begins with a capital letter and has at least one lower case letter.

Referring to Fig. 6, a Web page having content and layout format slightly different from the Web page of Fig. 1 (a) has a slightly different HTML text sequence (or source code) from that in Fig. 1(b). Accordingly, an extractor will use different contextual rules to identify the transitions between states associated with extracting different attributes from the Web page. The contextual rule for transition from any other state to state ***A*** in this example may be:
Rule 4: Transfer to state ***A*** if
Left context = (Html(</A>) Punc(,) Spc(_) Html(<I>) or
Punc(_) NL(_) Spc(_) Html(<I>) or
Punc(,) Spc(_) Html(<I>) and
Right context = C1alph(_)
Rule 4 requires that the left context is either (i) an HTML tag "</A>", followed by a comma, any number of spaces, and an HTML tag "<I>"; or (ii) any punctuation mark, followed by a new line character, any number of spaces, and an HTML tag "<I>"; or iii) a comma, followed by any number of spaces, and an HTML tag "<I>". Rule 4 requires that the right context is a string that begins with a capital letter, and has at least one lower case letter.

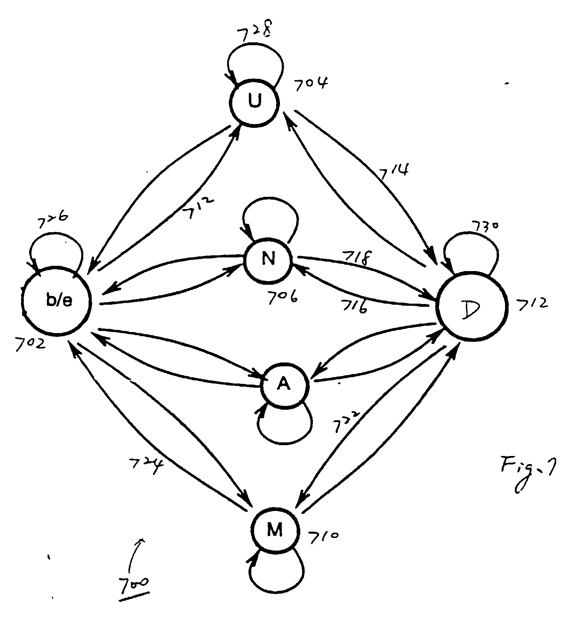

Referring to Fig. 7, a state transition diagram 700 represents the state transition rules used by another embodiment of the information extractor. This is a universal single pass information extractor that has states ***b/e, U, N, A, M,*** and ***D***. It is suitable for extracting attributes *U*, *N, A,* and *M* from an input text sequence. The input text sequence may come from a Web page such as the one shown in Fig. 1(a) or Fig. 6, or it may be a document generated by a word processor having similar attributes.

This extractor can process documents having attributes *U*, *N, A,* and *M* that appear in any permutation sequence. For example, the extractor can process an entry that has attributes *(M, A, U, N).* Such a sequence cannot be processed by the single pass extractor described in accordance with Fig. 2. The diagram in Fig. 7 is used only as an example. If an input text sequence has different attributes, then the universal single pass information extractor will also have a different set of state transition rules.

The extractor can process an entry that has attributes *(U, N, M*) by traversing the states ***b/e - U - D - N - D - M - b/e.*** When the extractor is in state **D**, the extractor is reading dummy tokens that are located between attributes. The extractor starts with state ***b/e*** 702. The extractor reads sequential ones of tokens and remains in state ***b/e*** 702 via path 726 until a token belonging to attribute *U* is identified. Then the extractor transfers to state ***U*** 704 via path 712. The extractor reads tokens and remains in state ***U*** 704 via path 728 until a token that does not belong to attribute *U* is identified. The extractor stores (or outputs) the extracted attribute *U*, then transfers to state ***D*** 712 via path 714. The extractor reads tokens and remains in state ***D*** 712 via path 730 until a token that belongs to attribute *N* is identified. The extractor transfers to state ***N*** 706 via path 716, extracts the attribute *N*, then transfers to state ***D*** 712 again via path 718. Next, the extractor goes to state ***M*** 710 via path 722, extracts attribute *M*, then goes to state ***b/e*** 702 via path 724, ending the cycle of extraction for this entry.

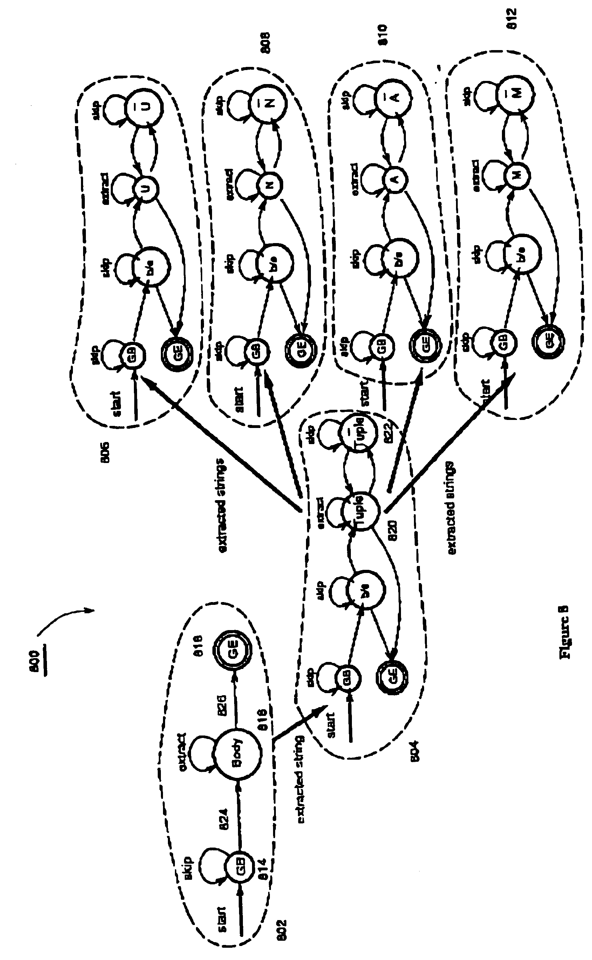

Referring to Fig. 8, a state transition diagram 800 represents the state transition rules used by another embodiment of the information extractor. This is a multi-pass information extractor suitable for extracting attributes *U*, *N, A,* and *M* in an input text sequence. If an input text sequence has different attributes, then the multi-pass information extractor will also have a different set of state transition rules.

An information extractor utilizing the transition rules of Fig. 8 has the equivalent of six information extractors 802, 804, 806, 808, 810, and 812, each performing partial extraction on the input text sequence. The extractor 802 scans through the input text sequence and finds the part of the input document, referred to as the "body"; that starts with the first attribute and ends with the last attribute.

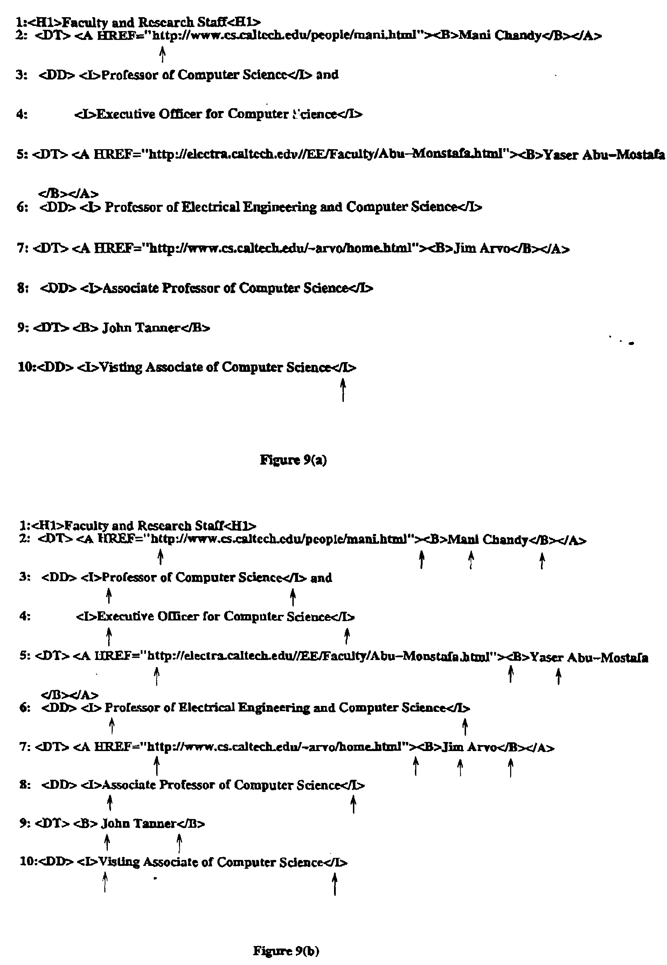

Referring to Fig. 9 (a), the first arrow pointing to "h" at line 2 shows the beginning of the first attribute, and the arrow pointing to "e" at line 10 shows the end of the last attribute. The extractor 802 finds the offset values indicated by the first and second arrows in Fig. 9 (a), and sends these two offset values along with the input text sequence to the extractor 804.

The state ***GB*** 814 in Fig. 8 represents the state in which the extractor is performing functions associated with reading dummy tokens before the first attribute. The state ***Body*** 816 represents the state in which the extractor is performing functions associated with reading tokens within the body part, which includes the first and last attribute and all the text sequence in between. The extractor enters state ***GE*** 818 after the last token of the last attribute has been read. One contextual rule, designated as **(GB, Body),** is associated with the transition path 824 from state ***GB*** 814 to state ***Body*** 816. Another contextual rule, designated as ***(Body, GE),*** is associated with the transition path 826 from state ***Body 816*** 816 to state ***GE*** 818.

The extractor 802 in Fig. 8 starts in state ***GB*** 814. It reads a token and compares the context of the token with the contextual rule ***(GB, Body).*** Because the first attribute of the input text sequence is either attribute *U* or attribute *N,* the contextual rule ***(GB, Body)*** actually comprises of the rules (***GB, U***), and (***GB*, *N***). The rule (***GB*, *U***) identifies the transition between state ***GB*** 814 to state ***U*** (not shown here). The rule (***GB*, *N***) identifies the transition from state ***GB*** 814 to state ***N*** (not shown here). If either rule (***GB*, *U***) or rule (***GB, N***) is satisfied, then the extractor 802 enters state ***Body*** 816; otherwise, it remains in state ***GB*** 814. After the extractor enters the state ***Body*** 816, it stores the first token and the offset value of the start of the first token. It then reads the next token and compares the context of that token with the contextual rule (***Body, GE***). If the rule (***Body, GE***) is not matched, the extractor 802 stores the token, remains in state ***Body*** 816, and continues to read the next token. If rule (***Body, GE***) is satisfied, then the extractor 802 enters state ***GE*** 818, stores the offset value of the end of the last attribute, and ends the process for extractor 802. The extractor 804 then carries on the extraction process.

Referring to Fig. 9 (b), the arrows indicate the start and end of attributes, representative of the offset values generated by the extractor 804. The attributes are extracted when the extractor 804 is in the state ***Tuple*** 820. The state ***Tuple'*** 822 refers to the state when the extractor 804 is reading dummy tokens located between attributes. The extractor 804 receives the input text sequence and the two offset values generated by the extractor 802, and repeatedly extracts the attributes without identifying whether it is attribute *U, N, A,* or *M.* The output of the extractor 804 is the offset values of the start and end of all attributes. After finding the offset values, the fours extractors 806, 808, 810, and 812 are invoked to extract attributes *U, N, A,* and *M,* respectively.

The single pass and multi-pass information extractors of the present invention can process documents having missing attributes. For example, one faculty member may not have an administrative title, while another may not have an URL address. The extractors of the present invention can also process documents having multiple attributes, e.g., a faculty may have two or more administrative titles. The extractors may also process documents having variant attribute ordering. For example, a Web page may have several entries with the academic title appearing before the administrative title, but also has one entry which the academic title appears after the administrative title.

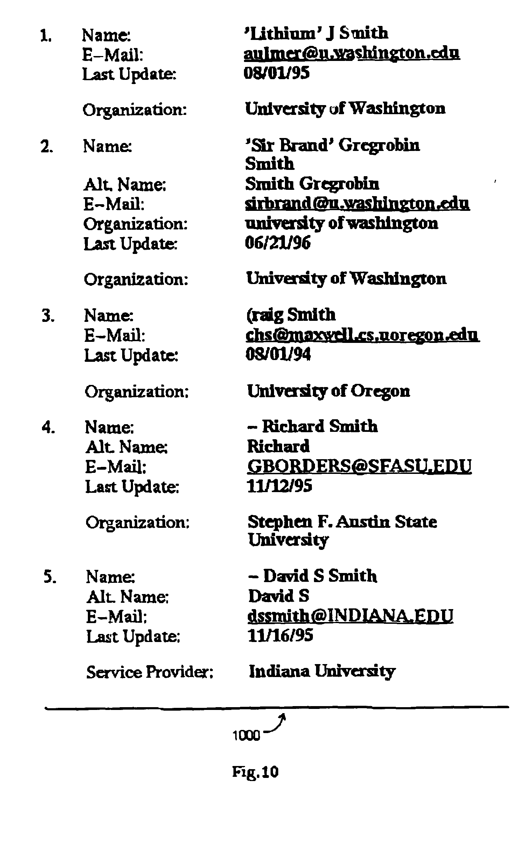

Referring to Fig. 10, a tagged-list text sequence 1000 has five entries. Each entry includes attributes "Name", "E-Mail", "Last Update", "Alt. Name", "Organization", and/or "Service Provider". The text sequence 1000 is different from the text sequence in Fig. 1(b) because text sequence 1000 contains the attribute names (herein referred to as "tags") for each attribute (herein referred to as "tag values"). An extractor can extract the attribute names along with the attributes ("tag-and-value pairs"), and then apply a post-processing step to convert the tag-and-value pairs into data tuples of attribute values.

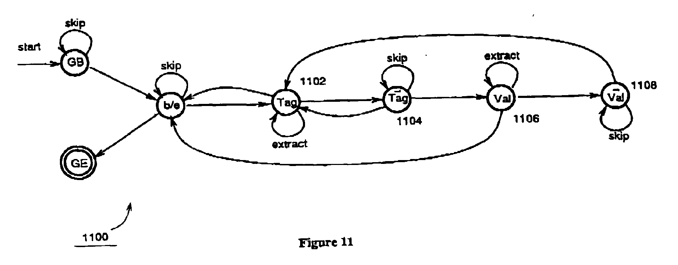

Referring to Fig. 11, a state transition diagram 1100 represents the state transition rules used by an embodiment of the information extractor for extracting a tagged-list text sequence. The extractor is suitable for extracting attributes *Tag* and *Value (Val).* When the extractor is in state ***Tag*** 1102, it is extracting tokens that belong to attribute *Tag,* such as "Name" or "E-Mail". When the extractor is in state ***Val*** 1106, it is extracting tokens that belong to attribute *Value,* such as " 'Lithium' J Smith", or "aulmer@u.Washington.edu", etc. When the extractor is in state ***Tag'*** 1104 and state ***Val'*** 1108, it is extracting dummy tokens.

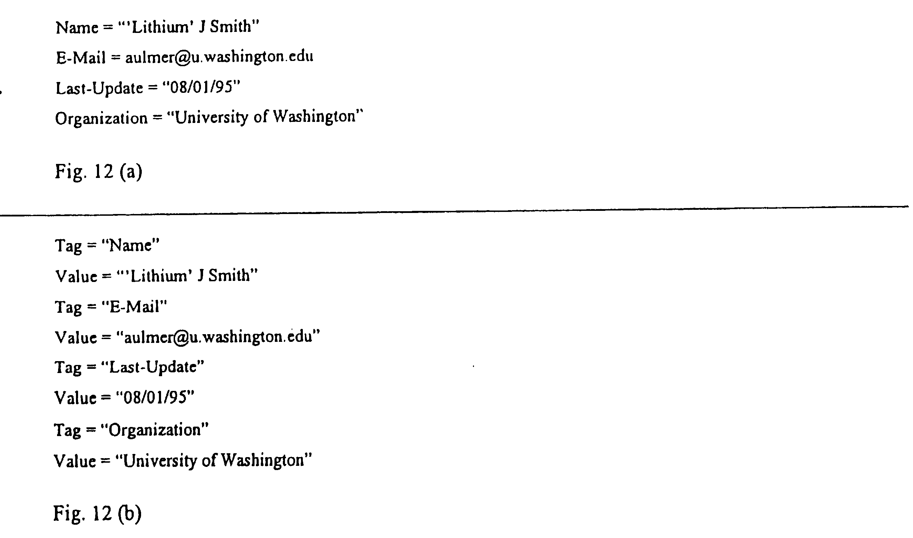

Referring to Fig. 12 (a), the attributes sought to be extracted from the first entry in the text sequence of Fig. 10 are "Name", "E-Mail", "Last-Update", and "Organization". Fig. 12 (b) shows the *Tag* and *Value* attributes extracted by an information extractor using the state transition diagram of Fig. 11. Note that the extractor does not differentiate between *Tag* or *Value* attributes that have different contents. A post processor can then transform the *Tag* and *Value* output in Fig. 12 (b) into the attribute list format in Fig. 12(a).

### Generating the Transition Paths

In accordance to the present invention, a learning program is provided to generate the transition paths used by an information extractor. In one embodiment, a sample text sequence representative of a target document is first given to the learning program. A user highlights the attributes within the sample text sequence, and then identifies which highlighted part is associated with which attribute. In the description hereafter, the HTML sequence in Fig. 1 (b) will be used as the sample text sequence.

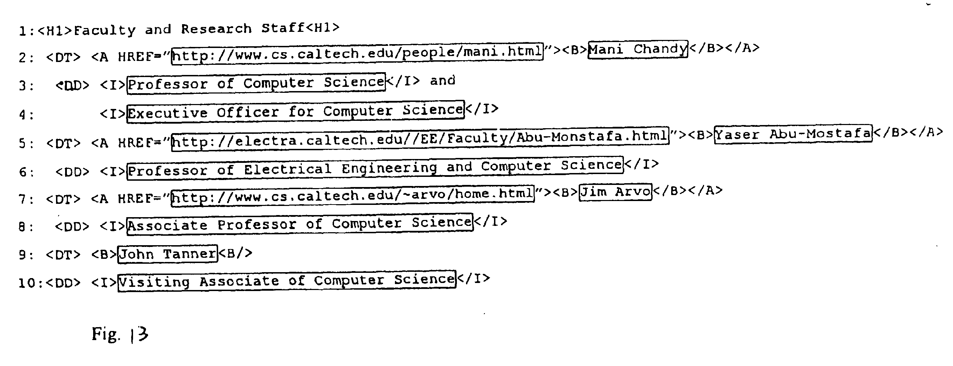

Referring to Fig 13, a user first uses a GUI to highlight the attributes on a display screen. Here, the attributes are enclosed in boxes. Then the learning program interactively prompts the user to enter the attribute name for each highlighted part. From these highlighted parts and the attribute names provided by the user, the learning can identify the different attribute combinations within an entry. For example, the learning program may identify the sample text sequence to have four entries, each entry having the data tuple (*U*, *N, A, M*), (*U, N, A*), (*U*, *N, A*), and (*N, A*), respectively. Other methods for labeling the attributes can be used to accommodate the particular GUI or other kinds of input device.

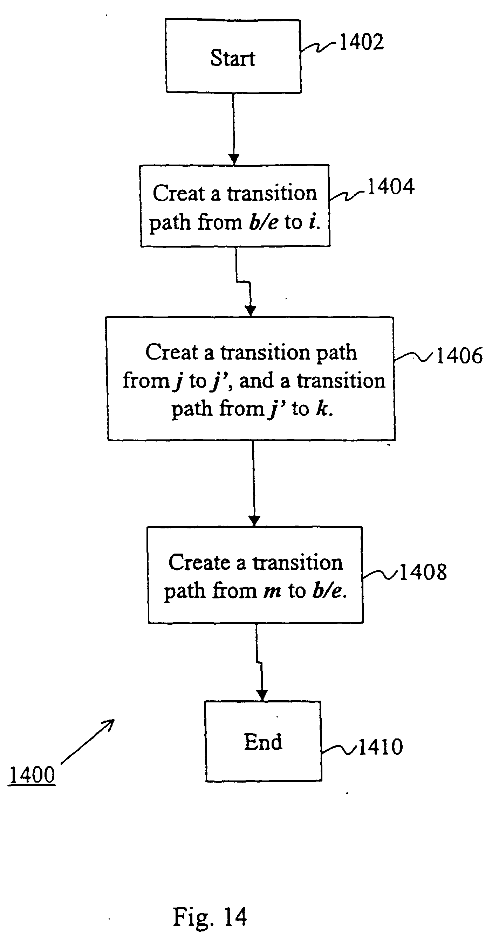

Referring to Fig. 14, a flow diagram 1400 represents the process of generating a set of transition paths. The learning program starts at block 1402. At block 1404, the learning program checks the first attribute of each data tuple. In this example, the first attribute is either *U* or *N.* For each such attribute *i* that is the first attribute of a data tuple, a transition path is created from state b/e to state *i*. Thus, transition paths ***(b/e*** → ***U)*** and *(**b/e*** → ***N**)* are created.

At block 1406, the learning program finds all possible attributes pairs that come in sequence. The possible attribute pairs are (*U, N*), *(N, A),* and *(A, M).* At block 1406, for each attribute pair (*j*, *k*) that comes in sequence, a transition path is created from state *j* to state *j'*, and from state *j'* to state *k*. State *j'* is a dummy state, and represents the state in which the extractor is reading a dummy token after the attribute *j*. The transition paths ***(U*** → ***U'**), (**U'*** → ***N**), (**N*** → ***N'**), (**N'*** → ***A**), (**A*** → ***A'**), (**A'*** → ***M**)* are created in block 1406.

At block 1408, the learning program checks to see which is the last attribute for each data tuple. Here, the last attribute can be either *A* or *M*. At block 1408, for each such last attribute *m*, a transition path is created from state ***m*** to state ***b/e.*** The transition paths *(**A*** → ***b/e**)* and *(**M*** → ***b/e**)* are created at block 1408. The transition path generation process is ended at block 1410. A total of 10 transition paths are created in this example. These transition paths are consistent with the ones shown in Fig. 3.

### Generating the Contextual Rules

In accordance with the present invention, the learning program can further generate the contextual rules used to determine when to enter or leave a state. The contextual rules are also used to determine which transition path to take when there are multiple transition paths branching out of a state. A sample text sequence with attributes correctly labeled by a user is given to the learning program. The learning program then generates the contextual rules by using a "set-covering" algorithm to cover all "positive token examples" and exclude all "negative token examples". Positive token examples are tokens such that their context should match the contextual rules. Negative token examples are tokens such that their context should not match the contextual rules.

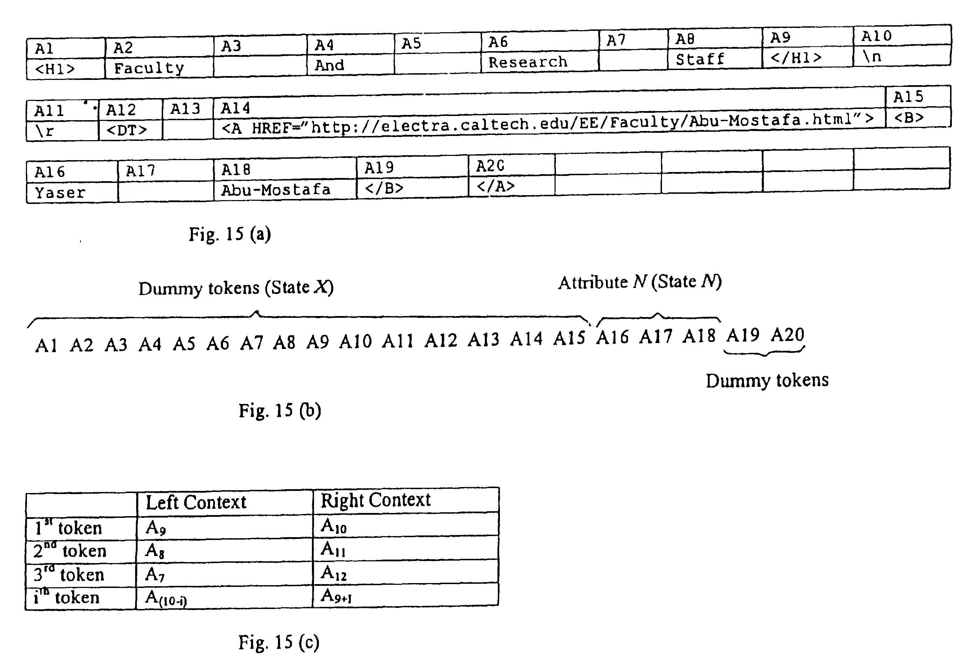

Referring to Fig. 15 (a), a sample text sequence having tokens *A1, A2, ... A20* is used to illustrate the method of generating a contextual rule. The text sequence has a *Name* attribute "Yaser Abu-Mostafa" that includes tokens *A16* to *A18*. The tokens *A1* to *A15,* and *A19, A20* are dummy tokens.

Referring to Fig. 15 (b), the extractor is defined to be in state ***X*** when reading dummy tokens before attribute *Name,* and be in state ***N*** when reading tokens that belong to attribute *Name.* The contextual rule for identifying the transition from state ***X*** to state *N* can be written as:
Rule 5: Transfer from state *X* to state *N* if
Left context = *LP* (left context pattern) and
Right context = *RP* (right context pattern).

The goal is to find the left context pattern *(LP)* and the right context pattern (*RP*). *LP/RP* should only match the left/right context of token *A16,* and should not match the left/right context of tokens *A1* to *A15.* Token *A16* is an example of a "positive sample", and tokens *A1* to *A15* are examples of "negative samples". A positive sample is a token that the contextual rule should correctly match, and a negative sample is a token that the contextual rule should not match. In general, there may be more than one positive sample. The contextual rule should match each one of the positive samples, and not match any of the negative samples. In this example, the goal is to find *LP/RP* such that when the extractor applies Rule 5 to tokens *A1* to *A16,* the extractor can correctly identify the transition from state ***X*** to state ***N*** at token *A16.*

Referring to Fig. 15 (c), the first token of the right context of token *A16* is *A16;* the second token of the right context of *A16* is *A17*, and so on. The first token of the left context of token *A16* is *A15*; the second token of the left context of *A16* is *A14,* and so on.

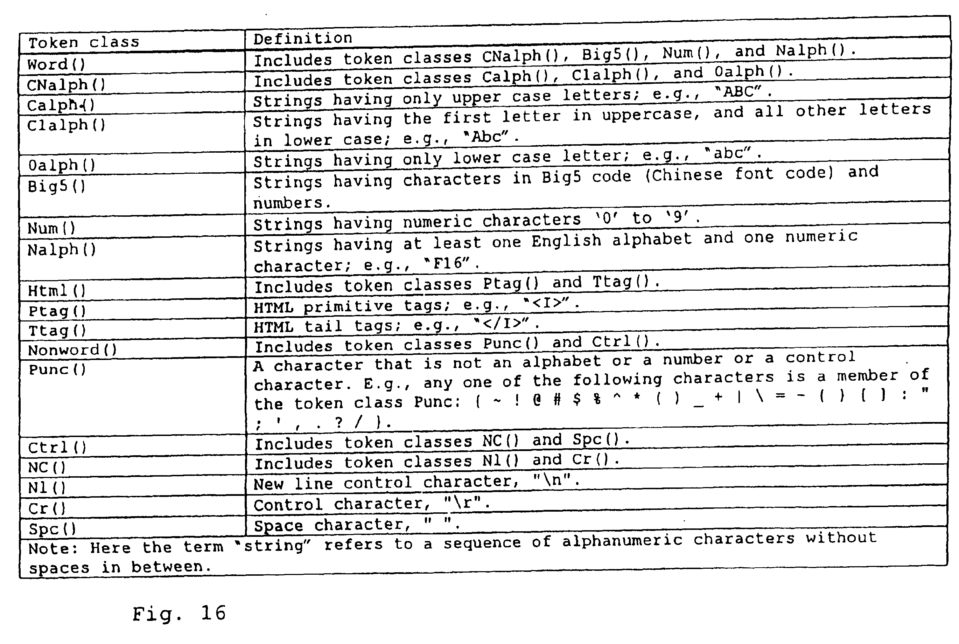

Initially, the learning program takes the first token of the left context of *A16* to generate a left context pattern. The left context pattern is a token class that includes the first token of the left context of *A16*. Because *A15* is an HTML tag "<B>", the left context pattern for the first token of the left context can be Html(_) or Ptag(_). The token classes used by the learning program are listed in Fig. 16.

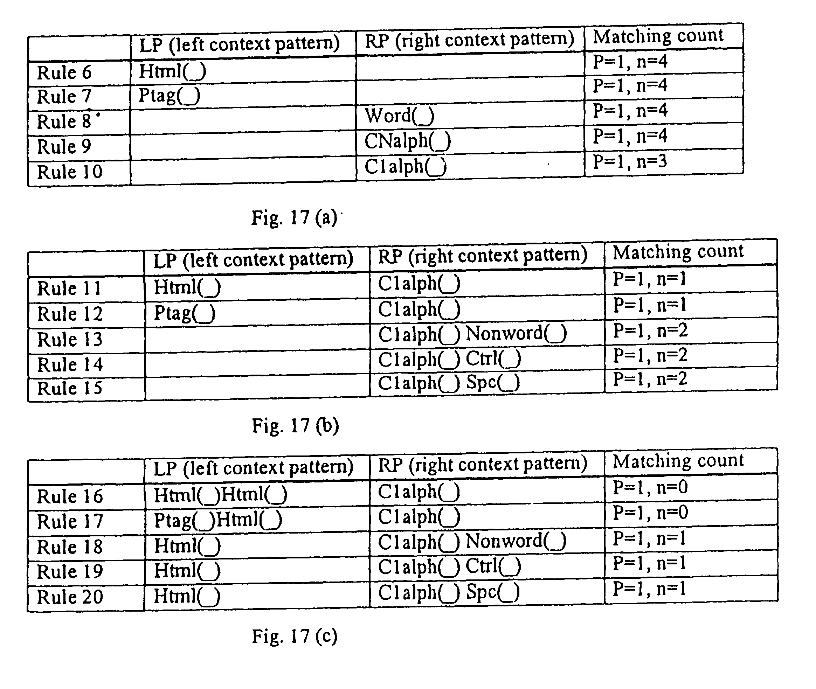

Referring to Fig. 17 (a), a tentative contextual rule may be:
Rule 6: Transfer from state ***X*** to state ***N*** if
Left context = Html(_).
Any token having an HTML tag as first token of the left context will satisfy Rule 6. Applying Rule 6 to tokens *A1* to *A15,* the token pattern Html(_) matches the left context of negative samples *A2*, *A10, A13,* and *A15.* The positive matching count (*p*) is defined as the number of positive samples that are matched, and the negative matching count (*n*) is defined as the number of negative samples that are matched. Here, *p* = 1 and *n* = 4.

Because "<B>" is also a member of the token class Ptag (_) , another tentative contextual rule may be:
Rule 7: Transfer from state ***X*** to state ***N*** if
Left context = Ptag(_).
The token pattern Ptag(_) matches the left context of negative samples *A2, A10, A13, and A15.* Thus *p* = 1 and *n* = 4.

The learning program then takes the first token of the right context of *A16* to generate a right context pattern. In this example, *A16* is a word "Yaser", thus the right context pattern for the first token of the right context may be Word(_), CNalph(_), or Clalph(_). These three token classes all match the token "Yaser".

Rule 8 uses Word (_) as the right context pattern. Comparing Word (_) with the right context of tokens *A1* to *A15*, Word (_) matches the right context of negative samples *A2*, *A4, A6,* and *A8.* Thus *p* = 1 and *n* = 4. For Rule 9, CNalph(_) also matches the right context of four negative samples, thus p = 1 and n = 4. For Rule 10, Clalph (_) matches the right context of negative samples *A2, A6,* and *A8*, thus *p* = 1 and *n* = 3.

Comparing Rules 6 to 10, Rule 10 results in the fewest incorrect matches (matching a negative sample). Typically, the learning program selects the tentative contextual rule that results in the greatest value for (*p* - *n*) / (*p + n*). If applying two rules to the relevant tokens result in the same values for (*p* - *n*)/(*p + n*), then the rule having a token class that is broader will be selected as the basis for finding the complete contextual rule. For example, the learning program will choose Rule 8 over Rule 9 because Word(_) has a broader scope than CNalph(_). The context pattern used in Rule 10 is incomplete because it still matches some negative samples.

Referring to Fig. 17 (b), the learning program finds the next set of tentative contextual rules (Rules 11 - 15) by using Clalph(_) as basis, and adding one token pattern to either the left or right context pattern. For Rules 11, Html(_) is added to the left context pattern of Rule 10. Thus, Rule 11 becomes:
Rule 11: Transfer from state ***X*** to state ***N*** if
Left context = Html(_) and
Right context = C1alph(_).
At this point, it is only necessary to compare Html(_) with the first token of the left context of tokens of *A2*, *A6*, and *A8*. Here, Html (_) matches the first token of the left context of *A2*, thus *p* = 1 and *n* = 1. For Rule 12, Ptag (_) also matches the first token of the left context of *A2*, thus *p* = 1 and *n* = 1.

For Rules 13 to 15, the learning program expands the right context pattern by adding a token pattern that matches the second token of the right context of *A16*. The second·token of the right context of *A16* is the space character " ", which belongs to the token classes Nonword(_), Ctrl(_), and Spc(_). Fur Rule 13, Nonword (_) is added to the right context pattern of Rule 10. Thus, Rule 13 becomes:
Rule 13: Transfer from state ***X*** to state ***N*** if
Right context = Clalph(_) Nonword(_).
The learning program compare Nonword(_) with the second token of the right context of the negative samples matched by Rule 10. Here, Nonword(_) matches the second token of the right context *A2* and *A6,* thus *p =* 1 and *n* = 2. For Rule 14, Ctrl(_) matches the second token of the right context of *A2* and *A6*, thus *p* = 1 and *n =* 2. For Rule 15, Spc(_) also matches the second token of the right context of *A2* and *A6*, thus *p* = 1 and *n* = 2. Comparing Rules 11 to 15, Rule 11 and 12 results in the fewest incorrect matches. Because Html (_) is a broader class than Ptag (_), the learning program selects Rule 11 as basis for finding the complete context pattern for the contextual rule.

Referring to Fig. 17 (c), the learning program finds the next set of tentative contextual rules by using *LP* = Html(_) and *RP* = Clalph (_) as basis, and adding one token pattern to either the left or right context patterns. The second token of the left context of *A16* is <A HREF="http://electra.caltech.edu/EE/Faculty/Abu-Mostafa.html">. This token belongs to the token classes Html(_) and Ptag(_). Rule 16 is generated by adding Html(_) to the left context pattern of Rule 11. Rule 17 is generated by adding Ptag(_) to the left context pattern of Rule 11. Rule 16 is:
Rule 16: Transfer from state ***X*** to state ***N*** if
Left context = Html(_) Html(_) and
Right context = C1alph(_).
The learning program compares Html(_) to the second token of the left context of the negative samples matched by Rule 11. Here, Html (_) does not match any second token of the left context of the negative samples. Thus, *p* = 1 and *n* = 0. For Rule 17, Ptag(_) also does not match any second token of the left context of the negative samples, thus *p* = 1 and *n* = 0. Applying Rules 18 - 20 all result in *p* = 1 and *n* = 1. Thus, Rule 16 and 17 are better than Rules 18 - 20. Rule 16 is selected as the final contextual rule because Html(_) is a broader class than Ptag(_). Therefore, the contextual rule for identifying the transition from state ***X*** to state ***A*** is Rule 16.

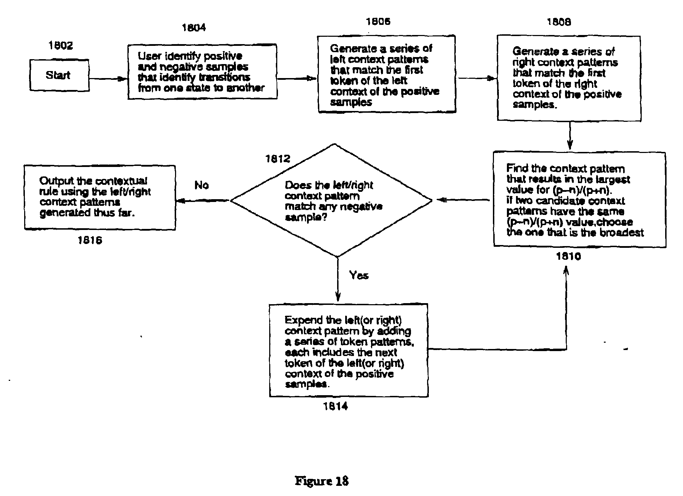

Fig. 18 illustrates a flow diagram for generating a contextual rule in accordance with an embodiment of the present invention The learning program starts at block 1802, and receives input from a user in block 1804 to identify positive and negative samples that identify transitions from one state to another. An example of a positive sample for the transition from state ***X*** to state ***N*** is the token *A16* in Fig. 15 (c), and examples of negative samples are tokens *A1* to *A15.* In block 1806, the learning program generates a series of left context patterns that match the first token of the left context of the positive samples. Examples of such left context patterns are Html(_) and Ptag(_). In block 1808, the learning program generates a series of right context patterns that match the first token of the right context of the positive samples. Examples of such right context patterns are Word(_), CNalph(_), and C1alph(_).

In block 1810, the learning program compares the left context patterns generated in block 1806 with the first token of the left context of negative samples, and determines the n value representing the number of negative samples that are matched. The learning program then compares the right context patterns generated in block 1808 with the first token of the right context of negative samples, and determines the n value representing the number of negative samples that are matched. The learning program chooses the context pattern that results in the largest value for (*p* - *n*)/(*p + n*). The number *p* represents the number of positive samples.

In block 1812, the learning program determines whether the context patterns generated so far is complete. If the left/right context pattern selected in block 1810 does not match any negative samples, then that context pattern is complete, and control is transferred to block 1816, and output the contextual rule using the left/right context patterns generated thus far. In block 1812, if the left/right context pattern selected in block 1810 still matches any negative samples, then control is transferred to block 1814. The left (or right) context pattern is expanded by adding a token pattern that matches the next token of the left (or right) context of the positive samples. Typically, block 1814 requires generating a series of context patterns and finding the one that results in the largest (*p* - *n*)/(*p + n*) value, similar to the actions performed in blocks 1806, 1808, and 1810. Blocks 1812, 1814 and 1810 are repeated until a left/right context pattern that doesn't match any negative sample is generated.

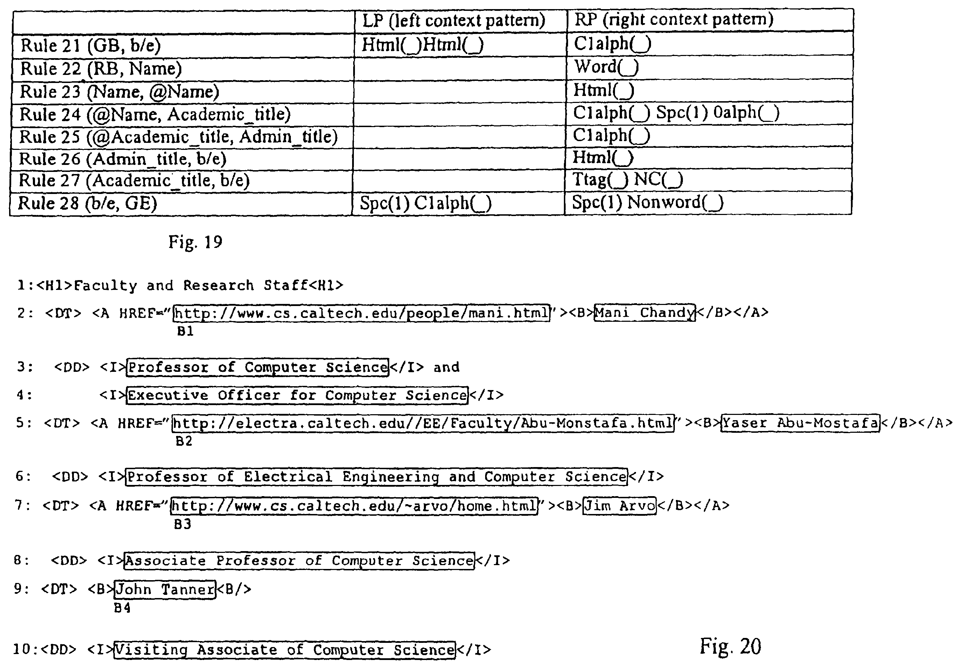

Referring to Fig. 19, Rules 21 - 28 form a sample set of contextual rules that can be used by an information extractor to extract the attributes "Name", "Academic_title", and "Admin_title" from a text sequence similar to the one shown in Fig. 1(b). Rule 21 is used to identify the transition from state ***GB*** to state ***b/e.*** Rule 22 is used to identify the transition from state ***b/e*** to state ***Name,*** and so on. The information extractor using Rules 21 - 28 has eight states: ***GB, b/e, Name, @Name, Academic_title, @Academic_title, Admin_title,*** and ***GE***. The state @***Name*** refers to a dummy state in which the extractor is reading dummy tokens between attribute *Name* and the next attribute. Each one of the Rules 21 - 28 can be generated by the learning program in accordance with the flow diagram of Fig. 18.

Referring to Fig. 20, the sample text sequence of Fig. 13 is shown with each attribute highlighted. For purpose of illustration, the first token of the first attribute of the four entries are labeled B1, B2, B3, and B4, respectively. Note that tokens B1, B2, and B3 have already been identified as belonging to attribute U, and B4 as belonging to attribute *N*. The description below illustrates the process of generating the contextual rules for an information extractor having the state transition diagram of Fig. 2. In Fig. 2, there are paths leaving state ***b/e:*** transition paths *(**b/e*** → ***U**)* and (***b/e*** → ***N***).

To generate the contextual rule for the transition path *(**b/e*** → ***U***), the learning program identifies tokens B1, B2, and B3 as positive samples because they belong to attribute *U*. All other tokens as negative samples. The learning program generates left/right context patterns that match only tokens B 1, B2, and B3, but no other tokens. To generate the contextual rule for the transition path (***b/e*** → ***N**),* the learning program first identifies token B4 as a positive sample because it belongs to attribute *N*. All other tokens as negative samples. The learning program then generates left/right context patterns that match only token B4, but no other tokens. The contextual rules with other transition paths can be generated in a similar way.

The presently disclosed embodiments are considered in all respects to be illustrative and not restrictive. The scope of the invention is indicated by the appended claims rather than the foregoing description, and all changes that come within the meaning and range of equivalents thereof are intended to be embraced therein.

## Claims

1. A method of extracting attributes from a token sequence, the method comprising the steps of:
identifying the beginning of a first attribute from the token sequence by applying a first set of contextual rules to sequential ones of the token sequence including comparing a left context and a right context of a token of the token sequence with a set of predetermined token patterns to determine whether one of said set of predetermined token patterns is satisfied;
upon identifying the beginning of the first attribute, storing sequential tokens which follow the token associated with the beginning of the first attribute until the end of the first attribute is identified.

2. The method of claim 1 wherein identifying the end of the first attribute includes applying a second set of contextual rules to sequential ones of the token sequence after the token associated with the beginning of the first attribute.

3. The method of claim 2, after the step of identifying the end of the first attribute, further comprising the steps of:
identifying the beginning of a second attribute from the token sequence by applying a third set of contextual rules to sequential ones of the token sequence after the token associated with the end of the first attribute, including comparing a left context and a right context of a token of the token sequence with a set of predetermined token patterns to determine whether one of said set of predetermined token patterns is satisfied;
upon identifying the beginning of the second attribute, storing sequential tokens which follow the token associated with the beginning of the second attribute until the end of the second attribute is identified; and
identifying the end of the second attribute including applying a fourth set of contextual rules to sequential ones of the token sequence after the token associated with the beginning of the second attribute.

4. The method of claim 3, wherein the first and second attributes belong to a predetermined set of attributes having a predetermined number of permutation sequences, and the set of predetermined token patterns used in said third set of contextual rules include token patterns for identifying a transition from a token not associated with any attribute to a token associated with an attribute that can possibly follow the first attribute according to the predetermined set of permutation sequences.

5. The method of claim 3, wherein the first and second attributes belong to a predetermined set of attributes having a predetermined number of permutation sequences, and the set of predetermined token patterns used in said third set of contextual rules include token patterns for identifying a transition from a token not associated with any attribute to a token associated with any attribute belonging to the predetermined set of attributes.

6. A method of extracting a first subset of tokens having a first attribute and a second subset of tokens having a second attribute from a token sequence, the method comprising the steps of:
identifying the first token of the first subset of tokens by applying a first set of contextual rules to sequential ones of the token sequence including comparing the left and right context of a token of the token sequence with a set of predetermined token patterns to determine whether one of said set of predetermined token patterns is satisfied;
upon identifying the first token of the first subset of tokens, storing sequential tokens that follow the first token of the first subset of tokens until the last token of the first subset of tokens is identified.

7. The method of claim 6 wherein identifying the last token of the first subset of tokens includes applying a second set of contextual rules to sequential ones of the token sequence after the last token of the first subset of tokens.

8. The method of claim 7, after the step of identifying the last token of the first subset of tokens, further comprising the steps of:
identifying the first token of the second subset of tokens by applying a third set of contextual rules to sequential ones of the token sequence after the last token of the first subset of tokens, including comparing the left and right context of a token of the token sequence with a set of predetermined token patterns to determine whether one of said set of predetermined left and right token patterns is satisfied;
upon identifying the first token of the second subset of tokens, storing sequential tokens which follow the first token of the second subset of tokens until the last token of the second subset of tokens is identified.

9. A method of extracting a first subset of tokens having a first attribute and a second subset of tokens having a second attribute from a token sequence, the second subset of tokens appearing after the first subset of tokens, the first and second attribute selected from a group of predetermined attributes, the method comprising the steps of:
identifying the first token of the first subset of tokens by applying a first set of rules to sequential ones of tokens in the token sequence;
identifying the last token of second subset of tokens by applying a second set of rules to sequential ones of tokens after the first token of the first subset of tokens;
identifying the last token of the first subset of tokens by applying a third set of rules to sequential ones of tokens after the first token of the first subset of tokens;
identifying the first token of the second subset of tokens by applying a fourth set of rules to sequential ones of tokens after the last token of the first subset of tokens;
identifying the attribute associated with the first subset of tokens; and
identifying the attribute associated with the second subset of tokens.

10. The method of claim 9, wherein the first set of rules for identifying the first token of the first subset of tokens includes rules for comparing a left context and a right context of a token with a set of predetermined left and right token patterns to determine whether one of said set of predetermined left and right token patterns is satisfied.

11. A method of extracting attributes from a token sequence, each attribute comprising at least one token, the method comprising the steps of:
accepting a plurality of rules which characterize a transition from a first attribute to a second attribute in the token sequence in terms of the left context and right context of a token;
accepting the token sequence;
identifying the borders between attributes in the token sequence by applying the plurality of rules to the token sequence.

12. The method of claim 11, wherein the transition from said first attribute to said second attribute includes a first transition from said first attribute to a dummy attribute, and a second transition from said dummy attribute to said second attribute.

13. The method of claim 11, wherein the attributes within the token sequence belong to a predetermined set of attributes, and said plurality of rules include rules for characterizing a transition from one attribute within the set of attributes to any other attribute within the set of attributes.

14. The method of claim 11, wherein the attributes within the token sequence belong to a predetermined set of attributes, and said plurality of rules include rules for characterizing a transition from one attribute within the set of attributes to a limited number of other attributes within the set of attributes.

15. A method of extracting subsets of tokens from a token sequence, each subset of tokens having an attribute selected from a group of attributes, the method comprising the steps of:
accepting a plurality of rules that identifies the borders of different subsets of tokens having different attributes by matching the left context and right context of a token to a predetermined set of left and right token patterns;
accepting the token sequence;
identifying the start and end of subsets of tokens by applying the plurality of rules to sequential ones of the token sequence; and
storing the subsets of tokens along with the attributes associated with the subset of tokens.

16. The method of claim 15, wherein the step of identifying the start and end of subsets of tokens comprises the steps of:
applying a first subset of the plurality of rules to sequential ones of tokens in the token sequence to identify the start of the first subset of tokens and the end of the last subset of tokens;
applying a second subset of the plurality of rules to sequential ones of the token sequence after the start of the first subset of tokens and before the end of the last subset of tokens, to identify the start and end of each subset of tokens;
applying a third subset of the plurality of rules to identify the attributes associated with each subset of tokens.

17. A system for identifying attributes in a token sequence, comprising:
a storage device for storing a plurality of rules which characterize a transition from a first attribute to a second attribute in the token sequence in terms of the left context and right context of a token;
a processor for accepting the token sequence and identifying the first and last tokens of attributes in the token sequence by applying the plurality of rules to the token sequence.

18. The system of claim 15, wherein the plurality of rules characterize all possible transitions from a first attribute to a second attribute, and said processor applies the plurality of rules to sequential ones of the token sequence to identify the first and last token of each attribute in the token sequence within a single pass of reading the token sequence.

19. The system of claim 15, wherein the plurality of rules comprises three subsets of rule:
a first subset of rules for identifying the first token of the first attribute and last token of the last attribute in the token sequence;
a second subset of rules for identifying the first and last token of all attributes without actually identifying the individual attributes, and
a third subset of rules for identifying each individual attribute.

20. A method of generating a contextual rule used by an extractor for identifying transitions between subsets of tokens having different attributes, comprising the steps of:
receiving a sample token sequence including a first subset of tokens having a first attribute and a second subset of tokens not associated with the first attribute, the second subset of tokens coming before the first subset of tokens in the token sequence;
identifying the first token of the first subset of tokens;
generating a pair of left and right context patterns that match the left and right context of the first token of the first subset of tokens but not the left and right context of the tokens belonging to the second subset of tokens;
whereby the left and right context patterns form the matching criteria of the contextual rule for identifying the transition from the second subset of tokens to the first subset of tokens.

21. The method of claim 20, wherein the step of generating the pair of left and right context patterns comprises the steps of:
finding a first set of token classes that matches the first token of the right context of the first token of the first subset of tokens;
finding a second token classes that matches the first token of the left context of the first token of the first subset of tokens;
select a token class among the first set and second set of token classes such that the number of tokens in the second subset of tokens matched by said token class is the least;
assign said token class as part of the left context pattern if said token class matches the left context of the first token of the first subset of tokens; and
assign said token class as part of the right context pattern if said token class matches the right context of the first token of the first subset of tokens.

22. The method of claim 21, further comprising the steps of:
finding a third set of token classes that matches an additional token of the left context of the first token of the first subset of tokens that is not already matched by the left context pattern or the right context pattern;
finding a fourth of token classes that matches an additional token of the right context of the first token of the first subset of tokens that is not already matched by the left context pattern or the right context pattern;
select a token class among the third set and fourth set of token classes such that the number of tokens in the second subset of tokens matched by said token class is the least;
adding said token class as part of the left context pattern if said token class matches the left context of the first token of the first subset of tokens;
adding said token class as part of the right context pattern if said token class matches the right context of the first token of the first subset of tokens.

23. A method of generating a set of contextual rules used by an extractor for identifying the transitions between subsets of tokens having different attributes, the subsets of tokens being grouped in a plurality entries, comprising the steps of:
receiving a sample token sequence;
identifying each subset of tokens with corresponding attribute names;
grouping the subsets of tokens into separate entries; and
generating a contextual rule for each possible transitions between attributes;
wherein said contextual rule includes comparing the left and right context of a token to a pair of predetermined left and right context patterns, and a transition is identified when a match is found.

24. A system for generating contextual rules for identifying attributes in a token sequence, comprising:
a memory for storing a sample token sequence;
a user interface for allowing a user to identify at least one token within the sample token sequence that identifies the transition from a first attribute to a second attribute;
a processor for receiving the sample token sequence and generating a pair of left and right context patterns that match the left and right context of said at least one token that identifies the transition of attributes, whereby the left and right context patterns form the matching criteria of a contextual rule for identifying the transition from said first attribute to said second attribute.

25. A method of generating transition rules for a single-pass extractor from a text sequence, the text sequence having a plurality of entries, each one of the plurality of entries having a set of attributes and a set of labels corresponding to the set of attributes, the method comprising the steps of:
(a) determining all possible permutations of attribute sequence within an entry from the set of attributes and set of labels in the text sequence; and
(b) creating a database of transition rules which identifies all possible transitions between attributes determined by step (a), each transition rule comprising the transitions from a first attribute to a dummy attribute and then to a second attribute.

26. A method of generating contextual rules for identifying transitions from a first subset of tokens to a second subset of tokens within a token sequence, the method comprising the steps of:
(a) identifying the positive token samples within the token sequence;
(b) identifying the negative token samples within the token sequence;
(c) applying a set-covering algorithm to generate a set of left and right context patterns that match the left and right context of all positive token samples and not match the left and right context of any negative token sample.
